# EUROPÄISCHE PATENTSCHRIFT

(11) **EP 1 616 843 B1**
(45) Veröffentlichungstag und Bekanntmachung des Hinweises auf die Patenterteilung: **16.07.2008**
(21) Anmeldenummer: 05450046.7
(22) Anmeldetag: 14.03.2005
(51) Int. Cl.: C03B 32/00, C03B 29/02

(54) **Vorrichtung zum Prüfen von gehärtetem Glas**
Apparatus for testing tempered glass
Dispositif pour tester du verre trempé

(30) Priorität: 15.07.2004 AT 12082004
(43) Veröffentlichungstag der Anmeldung: 18.01.2006
(73) Patentinhaber: Lisec Maschinenbau GmbH, 3353 Seitenstetten (AT)
(72) Erfinder: Lisec, Peter, 3363 Amstetten-Hausmening (N.Ö) (AT)
(74) Vertreter: Beer, Manfred

(56) Entgegenhaltungen:
- EP-A- 0 044 788
- EP-A- 1 000 906
- US-A- 3 942 967
- US-A- 3 977 091
- US-A- 4 028 052
- US-A- 4 851 022
- US-A- 5 045 102

## Beschreibung

Die Erfindung betrifft eine Vorrichtung zum Prüfen von gehärtetem Glas mit den Merkmalen des einleitenden Teils von Anspruch 1 (EP 1 000 906 A).

Gehärtetes Glas, das durch Aufheizen einer Glastafel auf eine Temperatur über der Härtungstemperatur und rasches Abschrecken erhalten wird, kann bei thermischen Belastungen in kleine Teilchen ("Krümel" mit Abmessungen in der Grössenordnung von 5 mm) zerbrechen.

Ursache hiefür sind beispielsweise Einschlüsse im Glas, insbesondere Einschlüsse aus Metall (z.B. Chrom-Nickel-Legierungen), die einen thermischen Ausdehnungskoeffizienten haben, der anders ist als jener von Glas. Dadurch entstehen bei Temperaturänderungen im gehärteten Glas, insbesondere oberflächlich, Mikrorisse, die dazu führen können, dass das gehärtete Glas schlagartig - scheinbar ohne äußere Einwirkung - zerbricht. Auch Einschlüsse aus Metallverbindungen, z.B. Nickelsulfid, können das schlagartige Zerbrechen von gehärtetem Glas zur Folge haben.

Es ist daher vorgesehen (Normen-Entwurf prEN 14179-1:2001), dass gehärtetes Glas, bevor es eingesetzt oder sonst wie verwendet wird, in einem "Heisslagerungsprozess" geprüft wird. Hiezu wird die gehärtete Glasscheibe auf eine Temperatur, für gewöhnlich auf eine Temperatur in der Größenordnung von 300°C, aufgewärmt, und eine Zeit lang - für gewöhnlich ein bis zwei Stunden - auf dieser Temperatur gehalten und dann wieder abgekühlt. Soferne bei dieser Prüfung kein Bruch des Glases auftritt, ist nicht zu erwarten, dass das gehärtete Glas später im Einsatz auf Grund von Einschlüssen bei Temperaturwechsel unvorhergesehen zerbricht.

Dieses Aufwärmen ("Aufheizphase"), Halten der Temperatur ("Haltephase") und Abkühlen ("Abkühlphase") im Heisslagerungsprozess wird chargenweise ausgeführt, d.h. die zu prüfenden Glastafeln werden in eine Kammer gebracht, aufgeheizt, die Temperatur gehalten und dann abgekühlt. Diese Arbeitsweise ist nachteilig, da sie nur einen geringen Durchsatz aufweist und mit erheblichem Energieverbrauch verbunden ist.

Aus der EP 1 000 906 A ist eine Kammer zum Prüfen von Glas auf Nickelsulfideinschlüsse bekannt. In der Kammer werden Gegenstände auf Paletten innerhalb vertikaler Platten mit Löchern angeordnet. Die Glasgegenstände stehen auf einem Boden, der nicht perforiert ist. Am oberen Ende der Kammer ist ein Gebläse vorgesehen. Des weiteren ist die Vorderseite der Kammer als Tür ausgebildet.

Problematisch ist es bei der bekannten Arbeitsweise auch, dass Glas-Krümel, die von beim Prüfen zerborstenen Glasscheiben stammen, die Prüfanlagen und/oder in diesen zu prüfende, gehärtete Glastafeln beschädigen.

Der Erfindung liegt die Aufgabe zu Grunde, eine Vorrichtung der eingangs genannten Gattung zur Verfügung zu stellen, mit welchen gehärtetes Glas rasch und energiesparend und ohne die geschilderten Nachteile geprüft werden kann.

Gelöst wird diese Aufgabe mit einer Vorrichtung, welche die Merkmale von Anspruch 1 aufweist.

Bevorzugte und vorteilhafte Ausgestaltungen der Erfindung sind Gegenstand der Unteransprüche.

Bei dem erfindungsgemäßen Verfahren werden die zu prüfenden, gehärteten Glastafeln in eine Kammer gebracht, in der sie auf die Prüftemperatur aufgeheizt, dann die vorgeschriebene Zeit auf der Prüftemperatur gehalten und schließlich abgekühlt werden.

Da bei der erfindungsgemäßen Vorrichtung die Luftströmung beim Aufheizen, beim Halten und beim Abkühlen durch einen gelochten Boden austretend nach oben gerichtet ist, ergibt sich ein energiesparender Betrieb der Vorrichtung beim Prüfen von gehärtetem Glas.

Bei der erfindungsgemäßen Vorrichtung ist der gelochte Boden wenigstens nach einer Richtung abfallend, und in einer Ausführungsform als bewegliches, gelochtes Förderband ausgebildet. So bewegen sich Glas-Krümel vom Boden weg und Glasstückchen ggf. zerbrochener Glastafeln bleiben nicht am Boden liegen, sondern werden vom Boden entfernt, sodass die Luftaustrittsöffnungen nicht verlegt werden und der Prüfvorgang ungestört weiter ablaufen kann.

Bei der erfindungsgemäßen Vorrichtung ist der Boden als Lochboden ausgebildet, der wenigstens nach einer Richtung schräg abfallend ausgebildet ist. Dies hat den Vorteil, dass im Falle des Bruches einer zu prüfenden Glastafel die Bruchstücke (Glas-Krümel) nicht über den gesamten Boden verteilt liegen bleiben, sondern sich in einem Bereich der tiefsten Stelle des Bodens ansammeln.

Dies erlaubt es bei der erfindungsgemäßen Vorrichtung, das zum Aufwärmen der Glastafeln benötigte gasförmige Fluid im Kreis zu bewegen, wobei das zum Aufwärmen benötigte gasförmige Fluid unterhalb des Bodens zugeführt werden kann und durch den Boden nach oben strömt. So ist ein besonders wirksames Erwärmen, ein wirksames Halten der Temperatur und schließlich ein wirksames Abkühlen der geprüften Glastafeln möglich.

Mit Vorteil kann im Rahmen der Erfindung bei einem schrägen Boden vorgesehen sein, dass dem Boden eine Vibrationseinrichtung zugeordnet ist, um das Wandern der Glasstückchen in die tiefste Stelle des Bodens zu unterstützen.

Wenn der Boden der erfindungsgemäßen Vorrichtung als gelochtes Förderband ausgebildet ist, werden Glas-Krümel durch das gegebenenfalls nur bei Bedarf (Bruch einer Glasscheibe) in Betrieb genommene Förderband von diesem weg bewegt und behindern die Bewegung (Strömung) des gasförmigen Heizmediums nicht.

In beiden Ausführungsformen - schräger Boden und gelochtes Förderband als Boden - besteht keine Gefahr, dass Glas-Krümel vom Heiz- oder Kühlmedium herumgewirbelt werden und Glasscheiben oder die Vorrichtung selbst beschädigen.

Vorteilhaft ist es, wenn bei der erfindungsgemäßen Vorrichtung die Glastafeln in sogenannte Fächerwagen eingestellt, in die Kammer gebracht und geprüft werden. Solche Fächerwagen sind bekannt, in welchem Zusammenhang auf die EP 0 704 389 B1 und die US 5,685,437 A verwiesen wird. Ähnliche Fächerwagen sind aus der EP 0 477 163 A oder der EP 603 151 A bekannt. Die aus der EP 0 477 163 A bekannte Fächerwagenkonstruktion ist auch aus der US 5,209,627 A bekannt.

In einer Ausführungsform können die Fächerwagen von vorne in die Kammer eingeschoben werden.

In einer Ausführungsform kann vorgesehen sein, dass an der Oberseite jedes Abschnittes der Kammer ein Gebläse und eine Heizvorrichtung vorgesehen ist, welche Gas umwälzen und beispielsweise von oben aus der Kammer abziehen und an der Seite und/oder unterhalb des Bodens den Abschnitten der Kammer wieder zuführen.

Weitere Einzelheiten und Merkmale der Erfindung ergeben sich aus der nachstehenden Beschreibung anhand der schematischen Zeichnungen, in denen Ausführungsformen von für das Durchführen des erfindungsgemäßen Verfahrens geeigneten, erfindungsgemäßen Vorrichtung dargestellt sind.

Es zeigt:
Fig. 1 eine erste Ausführungsform einer erfindungsgemäßen Vorrichtung in Schrägansicht und schematisiert;
Fig. 2 eine Vorderansicht der Vorrichtung von Fig. 1;
Fig. 3 einen Schnitt längs der Linie III-III in Fig. 2; und
Fig. 4 schematisiert eine zweite Ausführungsform einer erfindungsgemäßen Vorrichtung.

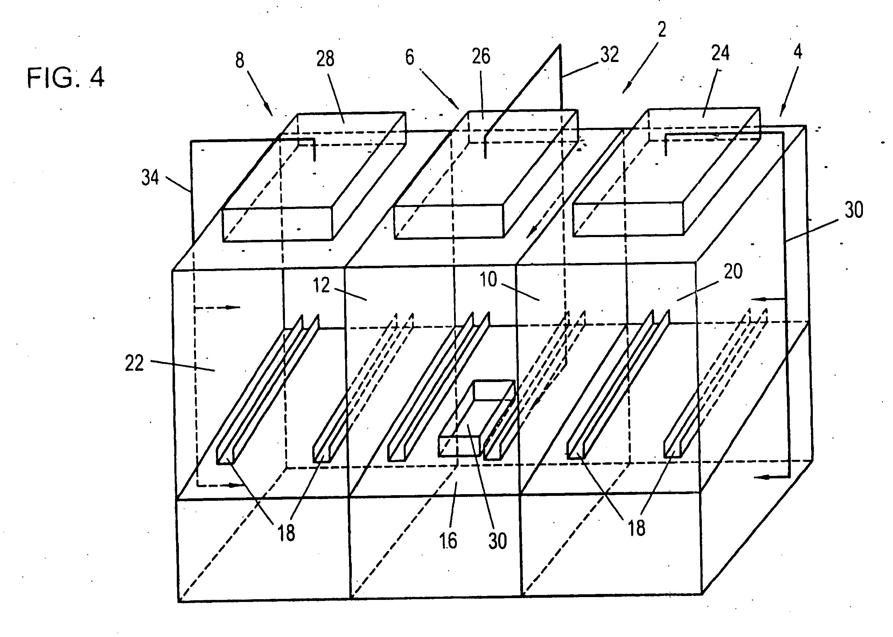

Zunächst wird die in Fig. 4 gezeigte Ausführungsform erläutert.

Die erfindungsgemäße Vorrichtung besteht aus einem Gehäuse 2, das durch Zwischenwände in drei Kammern 4, 6 und 8 unterteilt ist. Die Zwischenwände 10, 12 zwischen den Kammern 4, 6 und 8 können als öffenbare Türen, beispielsweise Schiebetüren, Rolltüren oder ähnliches, ausgebildet sein. Jede Kammer 4, 6, 8 ist unten durch einen perforierten Boden 16 verschlossen, der im Ausführungsbeispiel von hinten nach vorne abfallend ausgebildet ist. Im Bereich des Bodens 16 sind horizontale Führungsschienen 18 für die Aufnahme der Rollen von Fächerwagen (nicht gezeigt) vorgesehen. Auf den Führungsschienen 18 können Fächerwagen mit zu prüfenden, gehärteten Glastafeln in jede der Kammern 4, 6, 8 eingeschoben oder hineingehoben und auf den Schienen 18 abgestellt werden.

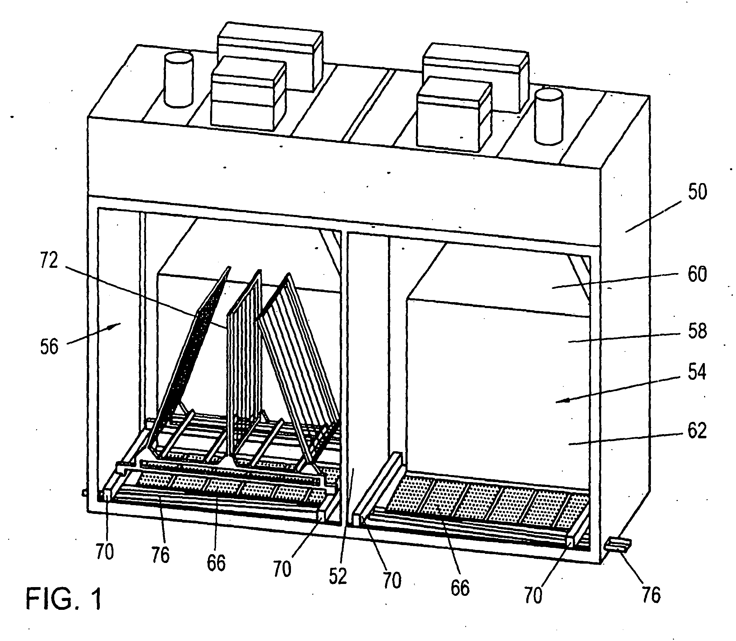

Dabei ist bevorzugt, wenn die Fächerwagen so eingeschoben werden, dass die gehärteten, zu prüfenden Glastafeln in Längsrichtung der Vorrichtung ausgerichtet sind, also parallel zur Bildebene von Fig. 1 stehen. Hiezu sind die vorderen Wände 20, 22 der Kammern öffenbar, z.B. als Tür oder dgl. ausgebildet.

Jeder Kammer 4, 6, 8 ist oben ein Gebläse 24, 26, 28 zum Abziehen von gasförmigem Heiz- oder Kühlmediums (Luft) zugeordnet, das auch mit einer Heizeinrichtung und mit einer Kühleinrichtung kombiniert sein kann. Von den Gebläsen 24, 26, 28 mit Heizeinrichtung bzw. mit Kühleinrichtung geht je wenigstens eine Leitung 30, 31, 34 aus, die in den Kammern 4, 6, 8 oberhalb und vor allem unterhalb des gelochten Bodens 16 mündet.

Der von hinten nach vorne.schräg abfallende Boden 16 ist perforiert, sodass erwärmtes/gekühltes gasförmiges Fluid durch den Boden 16 von unten nach oben in die Kammern 4, 6, 8 strömen kann. Es ist eine Ausführungsform bevorzugt, bei welcher das gasförmige Fluid, das zum Anwärmen, zum Halten der Temperatur und zum Abkühlen verwendet wird, ausschließlich unterhalb des perforierten Bodens in die Kammern 4, 6, 8 eingeleitet wird, sodass es durch den perforierten Boden 16 nach oben strömt,und oben von den Gebläsen 24, 26, 28 aus den Kammern 4, 6, 8 wieder abgezogen wird.

Wenn eine Glastafel während des Prüfverfahrens zerbrechen sollte, werden die Teilchen (Glas-Krümel) der Glastafel entlang des Bodens 16 nach unten zur tiefsten Stelle desselben gleiten, also im gezeigten Ausführungsbeispiel zum vorderen Rand des Bodens 16. Um diese Bewegung von Bruchstücken zu unterstützen, kann dem Boden 16 in jeder Kammer 4, 6, 8 eine Vibrationseinrichtung 30 zugeordnet sein, wie dies in der Zeichnung für die Kammer 6 schematisch angedeutet ist. Dies hat den Vorteil, dass Bruchstücke von zerbrochenen, gehärteten Glastafeln nicht herumwirbeln und weitere Glastafeln beschädigen, insbesondere zerkratzen, und/oder den Durchtritt von Fluid durch den Boden 16 nicht behindern. Am vorderen (tiefsten) Rand des perforierten Bodens 16 kann in jeder Kammer 4, 6, 8 eine Austragvorrichtung für Glasteilchen, die nach Bruch einer Glasscheibe entstehen, vorgesehen sein. Es ist auch möglich, eine einzige Austrageinrichtung, z.B. eine Rinne, die als Vibrationsförderer ausgeführt sein kann, vorzusehen, die für alle Kammern 4, 6, 8 gemeinsam ist.

An Stelle des festen, stillstehenden Bodens 16 kann in jeder Kammer 4, 6, 8, oder nur in einzelnen dieser Kammern, als Boden ein gelochtes, endloses Transportband vorgesehen sein.

Dieses Transportband, das gegebenenfalls zur Austragvorrichtung (Rinne) hin abfallend ausgerichtet sein kann, wird so in Bewegung gesetzt, dass bei einem Glasbruch entstehende Glas-Krümel aus dem Bereich der Kammer bewegt werden und beispielsweise in die Austragevorrichtung fallen.

Bevorzugt hat jede Kammer 4, 6, 8 an ihrer Vorderseite eine öffenbare Türe 20, 22, durch welche Fächerwagen ein- und ausgeschoben oder durch Gabelstapler eingestellt bzw. entnommen werden können.

Bei der erfindungsgemäßen Vorrichtung kann auch noch wenigstens ein Temperaturfühler vorgesehen sein, welcher die Temperatur von Glastafeln, insbesondere während des Anwärmens, erfasst. Möglich ist es auch, jedem Fach des Fächerwagens, das für die Aufnahme einer Glastafel bestimmt ist, einen Temperaturfühler zuzuordnen.

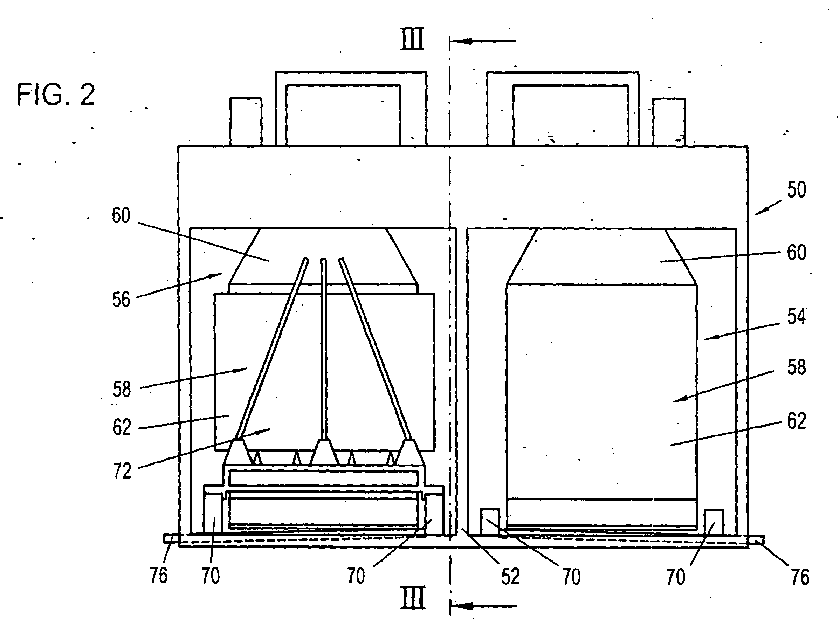

Nachstehend wird die in den Fig. 1 bis 3 gezeigte Ausführungsform einer erfindungsgemäßen Vorrichtung beschrieben.

Die in Fig. 1 bis 3 gezeigte Ausführungsform besitzt ebenfalls ein Gehäuse 50, das durch eine Zwischenwand 52 in zwei Kammern 54 und 56 unterteilt ist. Die Zwischenwand 52 kann auch entfernbar sein, sodass die Vorrichtung gemäß den Fig. 1 bis 3 eine einzige (große) Kammer innerhalb des Gehäuses 50 aufweist.

Jeder Kammer 54, 56 ist am oberen Ende im Bereich der oberen Deckwand des Gehäuses 50 eine Heizvorrichtung mit Gebläse zugeordnet, die Luft aus dem oberen Abschnitt jeder Kammer 54, 56 aufnimmt und über eine Heizeinrichtung, die ebenfalls im Bereich der Deckwand des Gehäuses 50 angeordnet ist, saugt, und durch einen Kanal 58, der einen oberen, sich trichterförmig erweiternden Abschnitt 60 und einen Abschnitt mit konstanter Breite 62 aufweist, bis zu einem unteren Abschnitt 64 leitet, der unterhalb von in die Kammern 54, 56 eingestellten Fächerwagen 72 mit zu prüfenden Glastafeln angeordnet ist. Der Abschnitt 64 ist an seiner Oberseite perforiert, sodass Gas, das vom Gebläse zugeführt wird, durch den "perforierten Boden" 66 nach oben ausströmen kann.

An beiden Seiten den unteren Abschnittes 64 mit seinem perforierten Boden 66 sind Schienen 70 für die Aufnahme von Füßen oder Rollen von Fächerwagen 72 angeordnet.

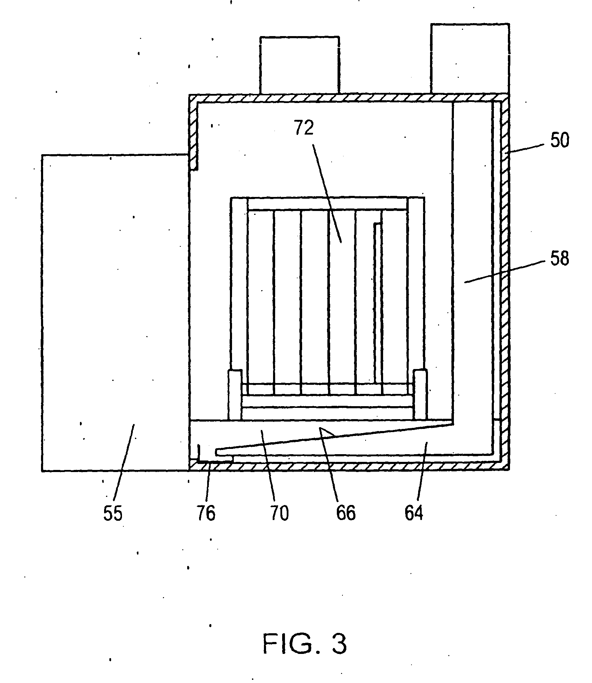

Diese Fächerwagen 72 können auf den Schienen 70 durch die geöffneten Kammern 54, 56 (hiezu besitzen die Kammern Türen 55, Fig. 3) eingeschoben oder mit Hilfe von Gabelstaplern oder ähnlichen Transportgeräten eingestellt werden.

Am unteren Ende des Abschnittes 64 mit dem perforierten Boden 66 ist in jeder Kammer 54, 56 eine Rinne 76 vorgesehen, die aus dem Gehäuse 50 herausführt und abfallend ausgebildet ist, sodass sich in ihr ansammelnde Glasbruchstücke, die beim Brechen einer zu prüfenden, gehärteten Glastafel entstehen, abtransportiert werden können. Um dieses Austragen zu unterstützen, können dem perforierten Boden 66 und/oder den Rinnen 76 Vibrationseinrichtungen zugeordnet sein, sodass diese nach Art eines Vibrationsförderers arbeiten.

Bei der erfindungsgemäßen Vorrichtung in der Ausführungsform der Fig. 1 bis 3 ist zunächst daran gedacht, in jeder Kammer 54, 56 einen "Prüfzyklus" eines Heisslagerungsprozesses bestehend aus Aufheizphase, Haltephase, und Abkühlphase auszuführen. Bei dieser Ausführungsform kann die Zwischenwand 52 auch entfernt sein. Auch bei der in den Fig. 1 bis 3 gezeigten Ausführungsform kann der Boden als perforiertes Transportband ausgebildet sein.

Es ist aber auch eine Betriebsweise in Betracht gezogen, in der in einer der beiden Kammern 54, 56 die Aufheizphase ausgeführt wird und gleichzeitig in der anderen Kammer 56, 54 die Abkühlphase vor sich geht. In dieser Ausführungsform kann vorgesehen sein, zwischen den Kammern 54, 56 Luft umzuwälzen, sodass die Luft Wärme von den abzukühlenden Glastafeln in der einen Kammer aufnimmt und so zusätzlich angewärmt wird, um die Aufheizphase in der anderen Kammer auszuführen.

Zusammenfassend kann ein Ausführungsbeispiel der Erfindung wie folgt dargestellt werden:
Eine Vorrichtung zum Prüfen von gehärteten Glastafeln unter Anwendung einer Aufwärmephase, einer Haltephase und einer Abkühlphase besitzt wenigstens eine Kammer, in welche die zu prüfenden Glastafeln in Fächerwagen stehend, eingestellt werden. Die Vorrichtung besitzt ein Gebläse mit Heiz- und Kühleinrichtung, das saugseitig am oberen Ende der Kammer und druckseitig am unteren Ende der Kammer unterhalb eines die Kammer nach unten begrenzenden, gelochten Boden angeschlossen ist. Der gelochte Boden kann ein feststehender, schräggestellter Boden oder eine Fördereinrichtung mit einem gelochten Transportband sein. Neben dem Boden ist eine Austragrinne für bei Bruch einer Glastafel während des Prüfzyklus entstehende Glas-Krümel vorgesehen. So können allenfalls entstehende Glas-Krümel vom Boden entfernt werden, so dass sie weder den Austritt von Heiz/Kühlmedium durch den gelochten Boden behindern, noch vom Heiz/Kühlmedium herumgewirbelt werden und dabei zu prüfende Glastafeln und/oder die Vorrichtung beschädigen.

## Patentansprüche

1. Vorrichtung zum Prüfen gehärteter Glastafeln mit wenigstens einer Kammer (4, 6, 8; 54, 56) für die Aufnahme der zu prüfenden, gehärteten Glastafeln während der Anwärm-, der Halte- und der Abkühlphase, **dadurch gekennzeichnet, dass** die Kammer (4, 6, 8; 54, 56) einen gelochten Boden (16, 66) aufweist, sodass ein zum Erwärmen/Abkühlen der Glastafeln dienendes erwärmtes/gekühltes Fluid durch diesen Boden (16, 66) in die Kammer (4, 6, 8; 54, 56) leitbar ist, dass der Boden (16, 66) eine Austrageinrichtung (76) aufweist und dass der Boden (16, 66) zur Austragvorrichtung (76) hin schräg abfallend ausgebildet ist, sodass beim Zerbrechen einer zu prüfenden Glastafel entstehende Glasstückchen zu dieser bewegbar sind.

2. Vorrichtung nach Anspruch 1, **dadurch gekennzeichnet, dass** der Boden (14, 66) als gelochtes Blech ausgebildet ist.

3. Vorrichtung nach Anspruch 2, **dadurch gekennzeichnet, dass** mit dem Boden eine vibrationseinrichtung (30) gekuppelt ist, um den Boden (16, 66) in Schwingungen zu versetzen.

4. Vorrichtung nach Anspruch 1, **dadurch gekennzeichnet, dass** der Boden (16) als gelochtes Föderband ausgebildet ist.

5. Vorrichtung nach Anspruch 4, **dadurch gekennzeichnet, dass** mit dem gelochten Förderband ein Antrieb gekuppelt ist, der das obere Trum des Förderbandes in Richtung auf die Austragvorrichtung (76) hin bewegt.

6. Vorrichtung nach Anspruch 4 oder 5, **dadurch gekennzeichnet, dass** das gelochte Förderband zur Austragvorrichtung (76) hin schräg abfallend ausgebildet ist.

7. Vorrichtung nach einem der Ansprüche 1 bis 6, **dadurch gekennzeichnet, dass** ein Gebläse (24, 26, 28) für das Umwälzen von Fluid durch die Kammer (4, 6, 8; 54, 56) saugseitig mit dem oberen Ende der Kammer (4, 6, 8; 54, 56) und druckseitig mit dem unteren Ende der Kammer (4, 6, 8; 54, 56) verbunden ist.

8. Vorrichtung nach Anspruch 7, **dadurch gekennzeichnet, dass** das Gebläse (24, 26, 28) druckseitig mit der Kammer (4, 6, 8; 54, 56) an einer Stelle unterhalb des Bodens (16, 66) verbunden ist.

9. Vorrichtung nach einem der Ansprüche 1 bis 8, **dadurch gekennzeichnet, dass** als Austragevorrichtung eine Austragrinne (76) für Glasstückchen vorgesehen ist.

10. Vorrichtung nach Anspruch 9, **dadurch gekennzeichnet, dass** die Austragrinne (76) an der tiefsten Stelle des Bodens (16, 66) angeordnet ist.

11. Vorrichtung nach Anspruch 9 oder 10, **dadurch gekennzeichnet, dass** mit der Austragrinne (76) eine Vibrationseinrichtung gekuppelt ist.

12. Vorrichtung nach einem der Ansprüche 1 bis 11, **dadurch gekennzeichnet, dass** in der Vorrichtung wenigstens zwei Kammern (4, 6, 8; 54, 56) vorgesehen sind.

13. Vorrichtung nach Anspruch 12, **dadurch gekennzeichnet, dass** zwischen den Kammern (4, 6, 8; 54, 56) wenigstens eine entfernbare Trennwand (10, 12; 52) vorgesehen ist.

14. Vorrichtung nach einem der Ansprüche 8 bis 13, **dadurch gekennzeichnet, dass** das Gebläse (24, 26, 28) am oberen Ende der Kammer (4, 6, 8; 54,56) - also in der Deckwand derselben - angeordnet ist.

15. Vorrichtung nach Anspruch 14, **dadurch gekennzeichnet, dass** vom Gebläse (24, 26, 28) druckseitig ein Kanal (30, 60) ausgeht, der bis unterhalb des gelochten Bodens (16, 66) führt.

## Claims

1. Device for testing of tempered glass plates with at least one chamber (4, 6, 8; 54, 56) for accommodating the tempered glass plates to be tested during the heating, holding and cooling phase, **characterized in that** the chamber (4, 6, 8; 54, 56) has a perforated bottom (16, 66) so that the heated/cooled fluid which is used to heat/cool the glass plates can be routed through this bottom (16, 66) into the chamber (4, 6, 8; 54, 56), that the bottom (16, 66) has a discharges means (76) and that the bottom (16, 66) is made obliquely sloping toward the discharge device (76) so that thee glass fragments which form when one of the glass plates which is to be tested breaks can be moved relative to them.

2. Device according to claim 1, **characterized in that** the bottom (14, 66) is made as a perforated sheet.

3. Device according to claim 2, **characterized in that** a vibration means (30) is coupled to the bottom in order to shift the bottom (16, 66) into vibrations.

4. Device according to claim 1, **characterized in that** the bottom (16) is made as a perforated conveyor belt.

5. Device according to in claim 4, **characterized in that** a drive is coupled to the perforated conveyor belt and moves the upper strand of the conveyor belt strand in the direction to the discharge device (76).

6. Device according to the claims 4 or 5, **characterized in that** perforated conveyor belt is made obliquely sloping toward the discharge device (76).

7. Device according to the claims 1 to 6, **characterized in that** a fan (24, 26, 28) for circulating fluid through the chamber (4, 6, 8; 54, 56) is connected on the intake side to the top end of the chamber (4, 6, 8; 54, 56) and on the pressure side to the bottom end of the chamber (4, 6, 8; 54, 56).

8. Device according to the claim 7, **characterized in that** the fan (24, 26, 28) on the pressure side is connected to the chamber (4, 6, 8; 54, 56) at one point underneath the bottom (16, 66).

9. Device according to one of claims 1 to 8, **characterized in that** a discharge channel (76) for glass fragments is provided as the discharge device.

10. Device according to claim 9, **characterized in that** the discharge channel (76) is located at the lowest point of the bottom (16, 66).

11. Device according to claim 9 or 10, **characterized in that** a vibration means is coupled to the discharge channel (76).

12. Device according to one of claims 1 to 11, **characterized in that** wherein there are at least two chambers (4, 6, 8; 54, 56) in the device.

13. Device according to claim 12, **characterized in that** there is at least one removable partition (10, 12; 52) between the chambers (4, 6, 8; 54, 56).

14. Device according to one of the claims 8 to 13, **characterized in that** the fan (24, 26; 28) is located on the top end of the chamber (4, 6, 8; 54, 56), therefore in the ceiling wall of it.

15. Device according to claim 14, **characterized in that** a channel (30, 60) which leads to underneath the perforated bottom (16, 66) proceeds from the fan (24, 26, 28) on the pressure side.

## Revendications

1. Dispositif pour tester du verre trempé comprenant au moins une chambre (4, 6, 8 ; 54, 56) pour recevoir le verre trempé à tester pendant la phase de réchauffement, de maintien et de refroidissement, **caractérisé en ce que** la chambre (4, 6, 8 ; 54, 56) présente un fond (16, 66) perforé, de façon à ce qu'un fluide réchauffé/refroidi servant au réchauffement/refroidissement du verre puisse être introduit à travers ce fond (16, 66) vers la chambre (4, 6, 8 ; 54, 56), que le fond (16, 66) présente un dispositif d'évacuation (76) et que le fond (16, 66) est formé de manière oblique vers le bas en direction du dispositif d'évacuation (76), de façon à ce que si un verre à tester se brise, les morceaux de verre produits puissent être dirigés vers celui-ci.

2. Dispositif selon la revendication 1, **caractérisé en ce que** le fond (16, 66) est un tôle perforée.

3. Dispositif selon la revendication 2, **caractérisé en ce qu'**un dispositif vibrant (30) est couplé au fond pour provoquer des vibrations sur le fond (16, 66).

4. Dispositif selon la revendication 1, **caractérisé en ce que** le fond (16) est une bande de transport perforée.

5. Dispositif selon la revendication 4, **caractérisé en ce qu'**un entraînement est relié à la bande de transport perforée qui avance le tronçon avant de la bande de transport en direction du dispositif d'évacuation (76).

6. Dispositif selon la revendication 4 ou 5, **caractérisé en ce que** la bande de transport perforée est oblique vers le bas en direction du dispositif d'évacuation (76).

7. Dispositif selon l'une des revendications 1 à 6, **caractérisé en ce qu'**une soufflante (24, 26, 28) pour faire circuler le fluide à travers la chambre (4, 6, 8 ; 54, 56) est relié côté aspiration à l'extrémité supérieure de la chambre (4, 6, 8 ; 54, 56) et côté pression à l'extrémité inférieure de la chambre (4, 6, 8 ; 54, 56).

8. Dispositif selon la revendication 7, **caractérisé en ce que** la soufflante (24, 26, 28) est reliée côté pression à la chambre (4, 6, 8 ; 54, 56) en un point en-dessous du fond (16, 66).

9. Dispositif selon l'une des revendications 1 à 8, **caractérisé en ce qu'**une goulotte d'évacuation (76) pour les morceaux de verre est prévue comme dispositif d'évacuation.

10. Dispositif selon la revendication 9, **caractérisé en ce que** la goulotte d'évacuation (76) est disposée sur le point le plus profond du fond (16, 66).

11. Dispositif selon la revendication 9 ou 10, **caractérisé en ce qu'**un dispositif vibrant est couplé à la goulotte d'évacuation (76).

12. Dispositif selon l'une des revendications 1 à 11, **caractérisé en ce qu'**au moins deux chambres (4, 6, 8 ; 54, 56) sont prévues dans le dispositif.

13. Dispositif selon la revendication 12, **caractérisé en ce qu'**entre les chambres (4, 6, 8 ; 54, 56), au moins une paroi de séparation (10, 12 ; 52) pouvant être retirée est prévue.

14. Dispositif selon l'une des revendications 8 à 13, **caractérisé en ce que** la soufflante (24, 26, 28) est disposée sur l'extrémité supérieure de la chambre (4, 6, 8 ; 54, 56), c'est-à-dire dans le plafond de celle-ci.

15. Dispositif selon la revendication 14, **caractérisé en ce qu'**un canal (30, 60) part de la soufflante (24, 26, 28) côté pression et va jusqu'au dessous du fond perforé (16, 66).
